# EUROPEAN PATENT APPLICATION

(11) **EP 1 720 105 A1**
(43) Date of publication of application: **08.11.2006**
(21) Application number: 05291101.3
(22) Date of filing: 04.05.2005
(51) Int. Cl.: G06F 13/42, H04L 25/49

(54) **Serial bus with multilevel code**

(71) Applicant: TEXAS INSTRUMENTS INCORPORATED, Dallas, TX 75265 (US); TEXAS INSTRUMENTS FRANCE, 06271 Villeneuve Loubet Cedex, Nice (FR)
(72) Inventor: Leduc, Yves, 06330 Roquefort Les Pins (FR); Messina, Nathalie, 06100 Nice (FR); Clave, Gael C., 06600 Antibes (FR)
(74) Representative: Holt, Michael

(57) **Abstract**

There is provided a novel serial bus for connecting two or more integrated circuits for sending commands and exchanging data. The bus comprises an address and command bus ('C') and one or more data busses ('D1'...'Dn'). Commands, addresses and data are transmitted as groups of bits of variable length separated by a frame symbol. The signals are encoded with 4 levels. 3 levels are used to encode symbols 1 and 0. The 4th level is used for the frame symbol. The clock is reconstructed at the receiver side.

## Description

### FIELD OF THE INVENTION

The present invention relates generally to electronics, but more particularly to bus architecture.

### DESCRIPTION OF SPECIFIC EMBODIMENTS OF THE INVENTION

The invention proposes to connect two or more integrated circuits (IC's) with a novel serial bus called the "double four bus" (D4 Bus) to send commands and to exchange data.

An IC, called bus master, sends the commands, the addresses and organizes the data exchanges between IC's. The function of bus master can be transferred to another IC if this IC is built to handle this function. At the same instant, only one IC may be the bus master. The data exchanges can be organized in such a way that data can be directly sent from one IC to another IC without transiting by the bus master.

The bus is implemented in a single or multiple wires implementation. A wire called 'C' transports the commands and the addresses. This wire belongs to all implementations.
- In a '1 wire' implementation, only the wire 'C' is implemented.
- In a '2 wires' implementation, in addition to wire 'C', another wire called 'D' transports the data exchanged between two or more IC's.
- In a '3 or more wires' implementation, several 'D' wires called 'D1 ... Dn' transport the data exchanged between two or more IC's.

Each IC must be connected to the 'C' wire. In multiple implementations of the D4 bus, each IC can be connected or not to the appropriate number of 'D wires' depending on the specific system organization or partitioning and on the physical realization of this IC.

'C' is a unidirectional wire driven by the bus master with an exception for the interrupt transaction which will be described later below.

'D' is a bidirectional wire.

In the simplest implementation of the invention, the bus is realized on a single wire. This wire is a 'C' wire. The current bus master IC sends to one or more IC's
- Commands
- addresses

In the preferred implementation of the invention, the bus is realized on 2 wires. These wires are a 'C' wire and a 'D' wire.
1. The bus master IC sends to one or more IC's commands and addresses on the 'C' wire (and data for the IC connected only to this wire).
2. The bus master IC and the other IC's exchange data on the 'D' wire according to the command and addresses previously sent on the 'C' wire.

In the multi-wire implementation, several 'D' wires are used to increase throughput. There are two basic ways to do it:
1. Data is transferred in a true parallel manner on the several 'D' wires.
2. The Bus manager organizes several independent data exchanges on each 'D' wire.

These two basic ways could coexist in the same implementation and could be programmed if needed.

The D4 Bus exchanges control, address and data words with variable lengths with preferred granularity of 2 bits at a rate of 1 bit per clock period. This clock is required to fabricate the D4 Bus signals although there is no clock signal to be sent to sample the data at the receiver side.

The way the signal of the D4 Bus is coded allows the receiver to safely reconstruct an appropriate clock to sample the content of this signal. In other words, the coding of the D4 Bus signal contains the data and the clock to sample this data, all on a single wire.

Provision is also given inside the code to frame the words. This is allowing variable address, command and data lengths and it reinforces the robustness of the transactions.

Signal coding, decoding and Bus organization are described herein below.

### Signal Coding

The code is based mainly on a ternary coding. A 4th level is used more occasionally for word framing. We will call these levels 0, 0.5, 1 and 1.5 .

Note: No edge is transiting from 0 to 1, 1 to 0, 0.5 to 1.5, 1.5 to 0.5, 0 to 1.5, 1.5 to 0.

Here is the coding of a symbol '1' and symbol '0' (shown as dotted line•••••••) and the transitions (shown as solid line 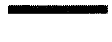 ) between symbols. The figure below shows a transition resp. from symbol 0 to symbol 1, from 1 to 1, from 1 to 0 and from 0 to 0. It is important to note that 2 edges are needed to send a symbol '1' or a symbol '0'.

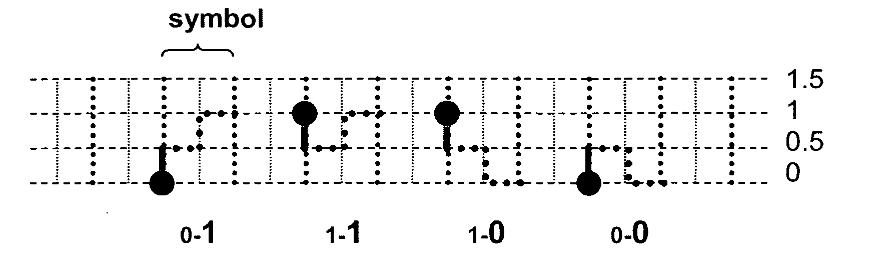

A fourth level is used occasionally to code a frame symbol as described in the figure below. This symbol will be used to frame the group of bits sent on the 'C' wire and the 'D' wire. The frame symbol could be advantageously combined with regular symbols '0' and '1' to build composite signal framing symbolizing several type of frames.

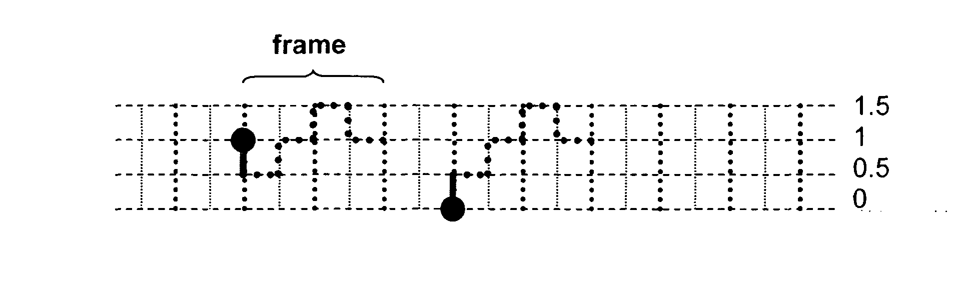

It is important to note that the frame symbol does not interfere with the symbols reserved to code '0' and '1' as this is the only one using the fourth level of the code.

### Signal Decoding

The code used by the D4 bus to construct the signal as described previously above is automatically embedding a clock which will be reconstructed simply and safely at the receiver side. This clock will be used to sample the signal itself. The figure below illustrates the principle.

Three comparators are used to detect signal edges from 0 to 0.5, 0.5 to 1 and 1 to 1.5. By construction, no edge is transiting from 0 to 1, 1 to 0, 0.5 to 1.5, 1.5 to 0.5, 0 to 1.5 and 1.5 to 0. Therefore there is no possibility to have a race between two output transitions of these 3 comparators. A XOR [or a XNOR ] of the output of these 3 comparators reconstruct simply a clock 'bclk' which will be by construction delayed by the XOR or XNOR gate. This clock is therefore perfectly suited to sample on the both edge the outputs of the comparators as the sampling will always occur just after the transitions of the comparators outputs. The sampling is totally insensitive to clock skew or comparator mismatches by construction. These outputs sh, sm and sl will be processed by a simple digital decoder to extract the digital data.

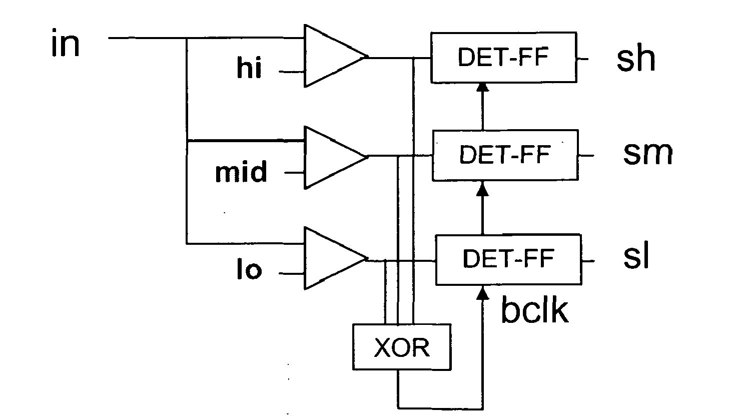

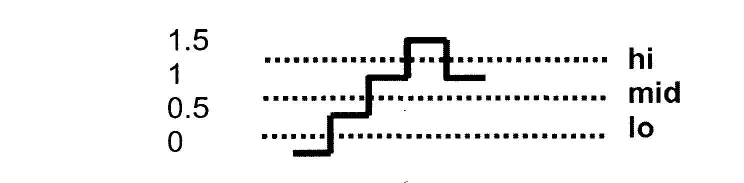

### Bus Organization

All traffic on wire 'C' and wire 'D' obey the coding detailed above.

### Simple transaction scheme:

The bus master sends on the 'C' wire a command including an address terminated by a frame symbol ('G') to initiate a transaction on the D4 Bus. The IC (or IC's) matching the address sends an appropriate answer on the 'D' wire. This answer is terminated by a frame symbol ('G'). As the frame symbol 'G' is triggering the answer, it is not necessary to wait for the completion of the answer on the 'D' wire to send the next command on the 'C' wire.

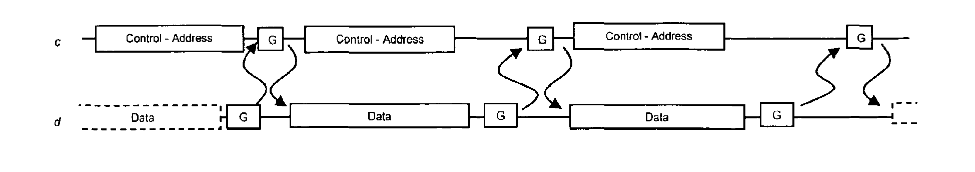

### Optional more complex transaction scheme:

By using a second type of frame symbol ('E'), it is possible to send multiple commands in a sequence, separated by this 'E' frame symbol. The 'E' frame symbol is framing the commands but do not trigger an answer from the concerned IC or IC's on the D wire. At the end of the sequence the 'G' frame symbol is sent by the bus master to trigger the answer. It is therefore possible to configure an IC as the emitter of a data and to configure one or several IC's (including the bus master) as receivers. Direct IC to IC transactions are therefore possible including multi-drop transactions

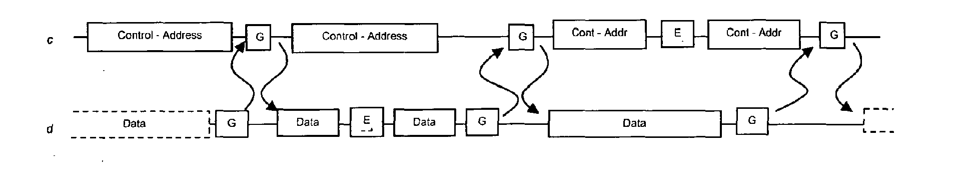

### Transactions

### Bus master Handover Transaction

Bus master status may be transferred from one IC to another IC by sending an appropriate command followed by a 'G' frame symbol on the 'C' wire and an acknowledge followed by a 'G' frame symbol back on the 'D' wire. The target IC must of course be built to act as a bus master.

### Regular Transactions

A regular transaction is composed of a command or a sequence of commands separated by a 'E' frame symbol, followed by a 'G' frame symbol sent by the bus master on the 'C' wire and an answer on the 'D' wire followed by a 'G' frame symbol. This answer could be also a sequence of answers separated by a 'E' frame symbol. Acknowledge or handshaking is possible on the 'D' wire to organize isochronous transactions where a double read or a double write are possible.

### Broadcast Command

The D4 bus is compatible with broadcast command.

### Transactions are Private

Although the command is public on the 'C' wire and must be understood by all the IC's connected to the D4 bus, the answer on the 'D' bus can be as fast as the concerned IC's are able to handle it. A slow IC not concerned by this transaction is not affected by this speed.

### Interrupt Service

Maskable interrupt can transit on the D4 bus. Bus master sends a broadcast command on the 'C' wire. It maintains the 'C' wire by a weak latch at level 1 for example. The IC or IC's requesting an interrupt pull(s) the 'C' wire down to 0. The bus master initiates an interrupt polling command or after a time-out, if no request has been done, starts a new command.

### Error Detection

The structure of the symbols '0', '1', 'E' and 'G' is composed of a double level. A glitch can always occur. If the synchronization shifts by half a bit, the receiver will immediately detect the problem as the pattern will be not recognized as valid.
'0' level 0.5 followed by level 0
'1' level 0.5 followed by level 1
'E' sequences of levels 0.5, 1, 1.5, 1 followed by a '0' or a '1'
'G' sequences of levels 0.5, 1, 1.5, 1 followed by a '0' or a '1'

If a glitch occurs, these patterns will be automatically replaced by other sequences of levels.

### Bus Topology

Many bus topologies are possible: from the simplest to the most sophisticated one.

### An example of a simple topology:

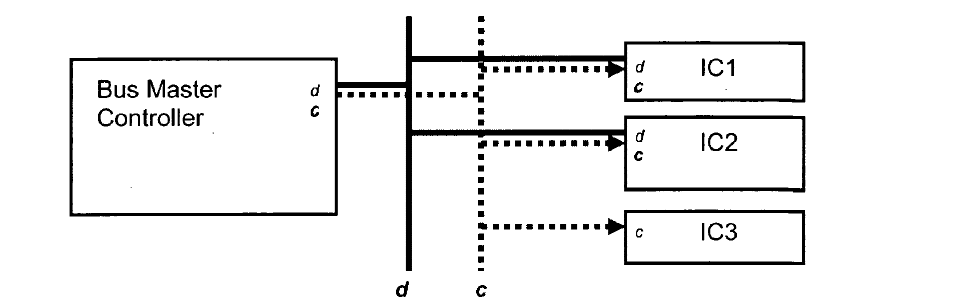

### An example of a more complex topology:

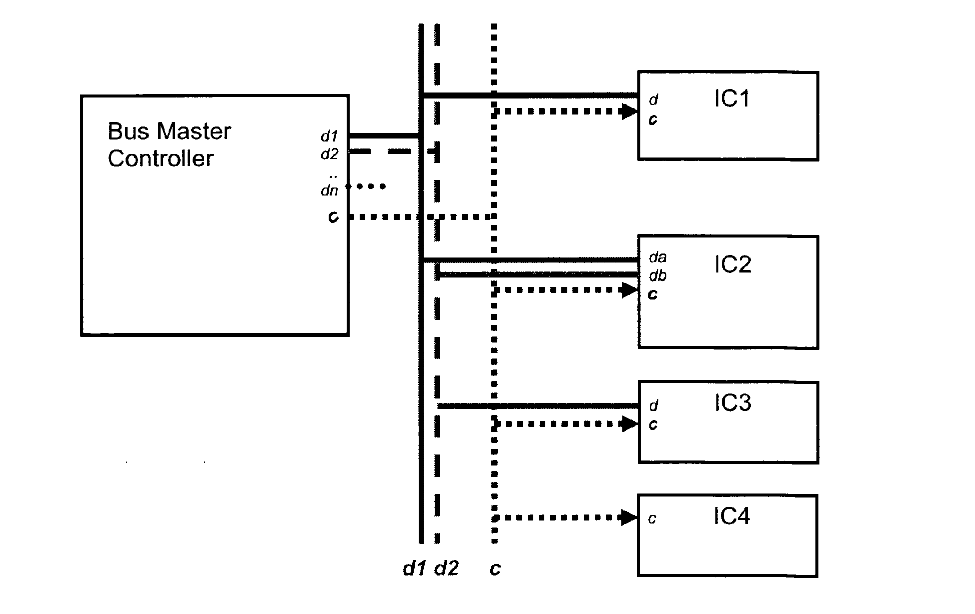

### Bus Scalability

The D4 Bus is highly scalable in various ways:
1. By the number of D wires (0 to N).
2. By the data rate. This data rate may be changed at any time as the bus is asynchronous by nature.
3. By the address or data lengths which are variable.
4. By the very flexible topology where IC's of various complexities may be mixed.

### Bus Physical Implementation

The D4 Bus requests a very minimum of gates.
It is also possible to link very modest IC's (like a stand alone voltage regulator) with higher complex IC's at a competitive cost with the same D4 bus.
Being clock skew insensitive, it is easy to exchange data at the highest speed, only limited by the IC technologies.

### Summary of the Characteristics of the Bus Proposal

0 ... 100 Mbit/s Connection between IC's
Serial Bus on 2 wires
Self clocked, clock skew insensitive
Very efficient architecture and protocol
Master controlled, peer to peer, IC to IC data exchanges
Master handover
Variable word length (control, address and data)
Support single and multiple addressing commands, broadcast commands...
Isochronous, synchronous, asynchronous and interrupt services
Private transactions allowing variable bit rate
Overlapped control and data framing
Low latency

High scalability allowing the simplest IC to talk to the most sophisticated one Realized with a very small gate count
Scalable and flexible topology
Robust implementation and protocol
High bit rate
Low power
Testability, manufacturability

## Claims

1. A bus architecture substantially as hereinbefore described.

2. A method substantially as hereinbefore described.
